# EUROPÄISCHE PATENTANMELDUNG

(11) **EP 3 062 006 A1**
(43) Veröffentlichungstag der Anmeldung: **31.08.2016**
(21) Anmeldenummer: 16151247.0
(22) Anmeldetag: 14.01.2016
(51) Int. Cl.: F16L 9/22, F16L 9/12

(54) **HOHLZYLINDRISCHES ROHR SOWIE HERSTELLUNGSVERFAHREN DAFÜR**

(30) Priorität: 24.02.2015 DE 102015203258
(71) Anmelder: ContiTech MGW GmbH, 34346 Hannoversch-Münden (DE)
(72) Erfinder: Kuhlhoff, Florian, 22457 Hamburg (DE); Pedersen, Andreas, 21259 Otter (DE)
(74) Vertreter: Finger, Karsten

(57) **Zusammenfassung**

Die Erfindung betrifft ein Hohlzylindrisches Rohr (2) zum Leiten eines Fluids durch einen von dem hohlzylindrischen Rohr (2) in Axialrichtung A ausgebildeten Kanal (4), aufweisend eine Rohrunterschale (6), die sich in Umfangsrichtung U des Rohrs (2) von einer ersten Axialdichtungsfläche (8) zu einer zweiten Axialdichtungsfläche (10) erstreckt, eine Rohroberschale (12), die sich in Umfangsrichtung U des Rohrs (2) von einer zweiten Axialgegendichtungsfläche (16) zu einer ersten Axialgegendichtungsfläche (14) erstreckt, wobei zur Bildung einer Mantelwandung (18) des Rohrs (2) die Rohroberschale (12) derart oberhalb der Rohrunterschale (6) angeordnet ist, dass die erste Axialdichtungsfläche (8) in Umfangsrichtung U des Rohrs (2) gegenüberliegend zu der ersten Axialgegendichtungsfläche (14) und die zweite Axialdichtungsfläche (10) in Umfangsrichtung U des Rohrs (2) gegenüberliegend zu der zweiten Axialgegendichtungsfläche (16) ausgerichtet ist, und wobei das Rohr (2) weiter aufweist: ein erstes Rohrschalendichtungsmittel (20), das zwischen der ersten Axialdichtungsfläche (8) und der ersten Axialgegendichtungsfläche (14) angeordnet ist, und ein zweites Rohrschalendichtungsmittel (22), das zwischen der zweiten Axialdichtungsfläche (10) und der zweiten Axialgegendichtungsfläche (16) angeordnet ist, und wobei eine erste, radial außenseitig zu der ersten Axialdichtungsfläche (8) und der ersten Axialgegendichtungsfläche (14) angeordnete und parallel dazu in Axialrichtung A erstreckende Klemme vorgesehen ist, die die Rohroberschale (12) und die Rohrunterschale (6) derart zusammenklemmt, dass durch die erste Axialdichtungsfläche (8), die erste Axialgegendichtungsfläche (14) und das dazwischen angeordnete, erste Rohrschalendichtungsmittel (20) eine erste fluiddichte Axialdichtung (28) gebildet ist, und wobei eine zweite, radial außenseitig zu der zweiten Axialdichtungsfläche (12) und der zweiten Axialgegendichtungsfläche (16) angeordnete und parallel dazu in Axialrichtung A erstreckende Klemme (26) vorgesehen ist, die die Rohroberschale (12) und die Rohrunterschale (6) derart zusammenklemmt, dass durch die zweite Axialdichtungsfläche (10), die zweite Axialgegendichtungsfläche (16) und das dazwischen angeordnete, zweite Rohrschalendichtungsmittel (22) eine zweite fluiddichte Axialdichtung (30) gebildet ist, und wobei die erste Klemme und die zweite Klemme (26) jeweils als Kunststoffspritzgussteil ausgestaltet sind.

## Beschreibung

Die Erfindung betrifft ein hohlzylindrisches Rohr zum Leiten eines Fluids durch einen von dem hohlzylindrischen Rohr in Axialrichtung ausgebildeten Kanal, aufweisend: eine Rohrunterschale, die sich in Umfangsrichtung des Rohrs von einer ersten Axialdichtungsfläche zu einer zweiten Axialdichtungsfläche erstreckt, und eine Rohroberschale, die sich in Umfangsrichtung des Rohrs von einer zweiten Axialgegendichtungsfläche zu einer ersten Axialgegendichtungsfläche erstreckt, wobei die Rohroberschale zur Bildung einer Mantelwandung des Rohrs derart oberhalb der Rohrunterschale angeordnet ist, dass die erste Axialdichtungsfläche in Umfangsrichtung des Rohrs gegenüberliegend zu der ersten Axialgegendichtungsfläche und die zweite Axialdichtungsfläche in Umfangsrichtung des Rohrs gegenüberliegend zu der zweiten Axialgegendichtungsfläche ausgerichtet ist, und wobei das Rohr weiter aufweist: ein erstes Rohrschalendichtungsmittel, das zwischen der ersten Axialdichtungsfläche und der ersten Axialgegendichtungsfläche angeordnet ist, und ein zweites Rohrschalendichtungsmittel, das zwischen der zweiten Axialdichtungsfläche und der zweiten

Axialgegendichtungsfläche angeordnet ist.

Die Erfindung betrifft außerdem ein Verfahren zur Herstellung eines hohlzylindrisches Rohrs zum Leiten eines Fluids durch einen von dem hohlzylindrischen Rohr in Axialrichtung ausgebildeten Kanal, aufweisend folgende Schritte: spritzgießendes Herstellen einer Rohrunterschale mit einer ersten und einer zweiten Axialdichtungsfläche, so dass sich die Rohrunterschale in Umfangsrichtung des Rohrs von der ersten Axialdichtungsfläche zu der zweiten Axialdichtungsfläche erstreckt, und spritzgießendes Herstellen einer Rohroberschale mit einer ersten und einer zweiten Axialgegendichtungsfläche, so dass sich die Rohroberschale in Umfangsrichtung des Rohrs von der zweiten Axialgegendichtungsfläche zu der ersten Axialgegendichtungsfläche erstreckt, spritzgießendes Herstellen eines ersten und eines zweiten Rohrschalendichtungsmittels, und Bilden einer Mantelwandung des Rohrs, indem die Rohroberschale derart oberhalb der Rohrunterschale angeordnet wird, dass die erste Axialdichtungsfläche in Umfangsrichtung des Rohrs gegenüberliegend zu der ersten Axialgegendichtungsfläche und die zweite Axialdichtungsfläche in Umfangsrichtung des Rohrs gegenüberliegend zu der zweiten Axialgegendichtungsfläche ausgerichtet ist, wobei das erste Rohrschalendichtungsmittel zwischen der ersten Axialdichtungsfläche und der ersten Axialgegendichtungsfläche angeordnet ist, und wobei das zweite Rohrschalendichtungsmittel zwischen der zweiten Axialdichtungsfläche und der zweiten Axialgegendichtungsfläche angeordnet ist.

Hohlzylindrische Rohre sind grundsätzlich aus dem Stand der Technik bekannt. Sie dienen zum Leiten eines Fluids, was beispielsweise gasförmig oder flüssig sein kann. Ein Fluid kann deshalb als ein Gas, insbesondere ein Gasgemisch, oder eine Flüssigkeit aufgefasst werden. Unter einem Rohr kann vorzugsweise auch ein Rohrabschnitt verstanden werden. Dabei ist der Querschnitt des Rohrs nicht notwendigerweise kreisförmig. Andere geeignete Zylinderquerschnitte, wie beispielsweise ein ovaler oder mehreckiger Querschnitt, sind grundsätzlich geeignet und gegebenenfalls vorgesehen. Vorzugsweise diente das hohlzylindrische Rohr zum Leiten einer Flüssigkeit, wie beispielsweise einem Gemisch aus Wasser und Glykol, vorzugsweise mit einer Temperatur zwischen 90 °C und 200 °C. Um das Fluid zu leiten, bildet das hohlzylindrische Rohr einen entsprechenden Kanal in Axialrichtung des Rohrs aus. Der Kanal erstreckt sich dabei von einem Kanaleingang zu einem Kanalausgang. Um zu verhindern, dass ein durch den Kanaleingang in den Kanal einströmendes Fluid ungewollt das hohlzylindrische Rohr verlässt, ist das Rohr möglichst fluiddicht auszugestalten.

Spritzgussverfahren sind grundsätzlich aus dem Stand der Technik bekannt. Sie können dazu dienen, um einfache oder komplexe Gegenstände herzustellen. Die spritzgießendes

Herstellung von einer Rohrunterschale, einer Rohroberschale oder eines Dichtungsmittels sind unter Zuhilfenahme von einschlägigen Standard-Fachliteraturquellen oder durch Allgemeinwissen des Fachmanns möglich.

Aus dem Stand der Technik ist es weiter bekannt, dass hohlzylindrische Rohre aus mehreren Teilen hergestellt sein können. So kann ein hohlzylindrisches Rohr beispielsweise eine Rohrunterschale und eine Rohroberschale aufweisen. Um nun ein fluiddichtes Rohr zu erhalten, ist die Rohroberschale dichtend auf der Rohrunterschale zu befestigen. Für eine Rohrunterschale ist es bekannt, dass sich diese in Umfangsrichtung des Rohrs von einer ersten Axialdichtungsfläche zu einer zweiten Axialdichtungsfläche erstreckt. Jede der beiden Axialdichtungsflächen weist dabei eine Erstreckung in Axialrichtung des Rohrs auf. Außerdem weist jede der beiden Axialdichtungsflächen eine Erstreckung in Radialrichtung des Rohrs oder in einer spitzwinkeligen Richtung dazu auf. Die beiden Axialdichtungsflächen können deshalb an den umfangmäßigen Enden der Rohrunterschale entsprechende Stoßdichtungsfläche bilden. Vorzugsweise ist die Rohroberschale korrespondierend und/oder analog zu der Rohrunterschale ausgebildet. Für die Rohroberschale ist es also bekannt, dass sich die Rohroberschale in negativer Umfangsrichtung des Rohrs von einer ersten Axialgegendichtungsfläche zu einer zweiten Axialgegendichtungsfläche erstreckt. Dabei können die erste Axialgegendichtungsfläche korrespondierend zu der ersten Axialdichtungsfläche und die zweite Axialgegendichtungsfläche korrespondierend zu der zweiten Axialdichtungsfläche ausgestaltet sein. Deshalb wird in diesem Zusammenhang auch von Dichtungsflächen und korrespondierenden Gegendichtungsflächen gesprochen. Für jede der beiden Axialgegendichtungsflächen kann eine Erstreckung in Axialrichtung des Rohrs angenommen werden. Außerdem weist jede der beiden Axialgegendichtungsflächen eine Erstreckung in Radialrichtung des Rohrs oder in einer spitzwinkeligen Richtung dazu auf. Die beiden Axialgegendichtungsflächen können deshalb an den umfangmäßigen Enden der Rohroberschale entsprechende Stoßdichtungsflächen bilden.

Die Rohroberschale und die Rohrunterschale bilden zumindest einen Teil einer Mantelwandung des Rohrs. Durch die Mantelwandung des Rohrs wird der innere Kanal des Rohrs gebildet oder begrenzt. Um die Mantelwandung des Rohrs zu bilden, wird zunächst die Rohroberschale oberhalb der Rohrunterschale angeordnet, und zwar derart, dass jeweils in Umfangsrichtung betrachtet die erste Axialdichtungsfläche gegenüberliegend zu der ersten Axialgegendichtungsfläche und die zweite Axialdichtungsfläche gegenüberliegend zu der zweiten Axialgegendichtungsfläche angeordnet sind.

Um die Rohroberschale und die Rohrunterschale miteinander zu verbinden, ist aus dem Stand der Technik bekannt, die beiden Rohrschalen an den jeweils gegenüberliegend angeordneten Dichtungsflächen zu verschweißen. Ein derartiges Verfahren ist aus der europäischen Patentanmeldung EP 2 194 303 A1 bekannt. In der Praxis wurde jedoch festgestellt, dass die Herstellung einer robusten und dauerbelastbaren Schweißverbindung, die sich in Axialrichtung des Rohrs erstreckt, nur mit einem sehr hohen technischen Aufwand möglich ist. Um die Fluiddichtigkeit des hohlzylindrischen Rohrs zu verbessern, ist es weiterhin bekannt, Rohrschalendichtungsmittel zu verwenden. Dabei handelt es sich um elastische Dichtungsmittel, die für die gegenseitige Abdichtung der Rohrschalen geeignet sind. Für das erfindungsgemäße hohlzylindrische Rohr sind deshalb ein erstes Rohrschalendichtungsmittel und ein zweites Rohrschalendichtungsmittel vorgesehen. Das erste Rohrschalendichtungsmittel ist zwischen der ersten Axialdichtungsfläche und der ersten Axialgegendichtungsfläche angeordnet. Das zweite Rohrschalendichtungsmittel ist zwischen der zweiten Axialdichtungsfläche und der zweiten Axialgegendichtungsfläche angeordnet. Dabei weisen die Rohrschalendichtungsmittel vorzugsweise eine Erstreckung in Axialrichtung auf, die zu den jeweils angrenzenden Dichtungsflächen korrespondiert. Vorzugsweise sind die Rohrschalendichtungsmittel aus einem elastisch verformbaren Material, insbesondere aus oder mit einem Elastomer, hergestellt.

Um die Dichtigkeit des hohlzylindrischen Rohrs zu verbessern, können also zwischen der Rohroberschale und der Rohrunterschale, und zwar an ihren jeweiligen Dichtungsflächen, Dichtungsmittel, nämlich die Rohrschalendichtungsmittel, vorgesehen sein. Zur mechanischen Verbindung der Rohrunterschale und der Rohroberschale wurde in der Praxis weiterhin die Schweißverbindung angewandt. Dabei wurde jedoch festgestellt, dass der entsprechende Schweißprozess die Rohrschalendichtungsmittel beschädigen kann. So konnte im Einzelfall beispielsweise festgestellt werden, dass die Rohrschalendichtungsmittel zumindest abschnittsweise verflüssigt werden, wenn die Rohroberschale und die Rohrunterschale an ihren entsprechenden umfangmäßigen Enden verschweißt werden. Mit der Verflüssigung von einem Rohrschalendichtungsmittel sinkt jedoch die Dichtigkeit an einer entsprechenden Stelle zwischen der Rohroberschale und der Rohrunterschale, was zu vermeiden ist.

Die Aufgabe der Erfindung ist deshalb die Bereitstellung eines aus mehreren Teilen schweißfrei herstellbaren, hohlzylindrischen Rohrs, das eine hohe Fluiddichtigkeit aufweist.

Gemäß einem ersten Aspekt wird die Aufgabe durch das erfindungsgemäße hohlzylindrische Rohr mit den Merkmalen des Anspruchs 1 gelöst. Vorgesehen ist also ein hohlzylindrisches Rohr zum Leiten eines Fluids durch einen von dem hohlzylindrischen Rohr in Axialrichtung ausgebildeten Kanal, aufweisend: eine Rohrunterschale, die sich in Umfangsrichtung des Rohrs von einer ersten Axialdichtungsfläche zu einer zweiten Axialdichtungsfläche erstreckt, und eine Rohroberschale, die sich in Umfangsrichtung des Rohrs von einer zweiten Axialgegendichtungsfläche zu einer ersten Axialgegendichtungsfläche erstreckt, wobei zur Bildung einer Mantelwandung des Rohrs die Rohroberschale derart oberhalb der Rohrunterschale angeordnet ist, dass die erste Axialdichtungsfläche in Umfangsrichtung des Rohrs gegenüberliegend zu der ersten Axialgegendichtungsfläche und die zweite Axialdichtungsfläche in Umfangsrichtung des Rohrs gegenüberliegend zu der zweiten Axialgegendichtungsfläche ausgerichtet ist, und wobei das Rohr weiter aufweist: ein erstes Rohrschalendichtungsmittel, das zwischen der ersten Axialdichtungsfläche und der ersten Axialgegendichtungsfläche angeordnet ist, und ein zweites Rohrschalendichtungsmittel, das zwischen der zweiten Axialdichtungsfläche und der zweiten Axialgegendichtungsfläche angeordnet ist, wobei eine erste, radial außenseitig zu der ersten Axialdichtungsfläche und der ersten Axialgegendichtungsfläche angeordnete und parallel dazu in Axialrichtung erstreckende Klemme vorgesehen ist, die die Rohroberschale und die Rohrunterschale derart zusammenklemmt, dass durch die erste Axialdichtungsfläche, die erste Axialgegendichtungsfläche und das dazwischen angeordnete, erste Rohrschalendichtungsmittel eine erste fluiddichte Axialdichtung gebildet ist, und eine zweite, radial außenseitig zu der zweiten Axialdichtungsfläche und der zweiten Axialgegendichtungsfläche angeordnete und parallel dazu in Axialrichtung erstreckende Klemme vorgesehen ist, die die Rohroberschale und die Rohrunterschale derart zusammenklemmt, dass durch die zweite Axialdichtungsfläche, die zweite Axialgegendichtungsfläche und das dazwischen angeordnete, zweite Rohrschalendichtungsmittel eine zweite fluiddichte Axialdichtung gebildet ist, und die erste Klemme und die zweite Klemme jeweils als Kunststoffspritzgussteil ausgestaltet sind.

Der Erfindung liegt der Gedanke zu Grunde, die Rohrschalendichtungsmittel bei einem mechanischen Verbinden der Rohroberschale mit der Rohrunterschale nicht, insbesondere nicht thermisch, zu zerstören. Dazu werden Kunststoffspritzguss-Klemmen verwendet. Die Klemmen können dazu aus einem thermoplastischen Kunststoff hergestellt sein. Dieser lässt sich besonders gut mittels eines Spitzgussverfahrens zu der jeweiligen Klemme verarbeiten. Als thermoplastischer Kunststoff für die Klemmen kommen insbesondere die folgenden Kunststoffe in Betracht: Polyamid, insbesondere PA6, PA6.6, PA6.6.6 oder PA6.6.12, oder Polyphthalamid. Darüber hinaus hat es sich als vorteilhaft erwiesen, wenn die Rohroberschale und/oder die Rohrunterschale ebenfalls mittels eines Kunststoffspritzgussverfahrens hergestellt sind. So können die Rohrunterschale und/oder die Rohroberschale jeweils aus dem gleichen Kunststoff oder aus einem anderen thermoplastischen Kunststoff hergestellt sein. In Betracht kommen hier wie zuvor beispielsweise: Polyamid, insbesondere PA6, PA6.6, PA6.6.6 oder PA6.6.12, oder Polyphthalamid.

Jede der Klemmen kann nach einer vorläufigen Fixierung der Rohroberschale auf der Rohrunterschale mit den Rohrschalendichtungsmitteln zwischen den jeweiligen, zugehörigen Dichtungsflächen, mittels eines Spritzgussverfahrens hergestellt werden. Das Spritzgießen der Klemmen kann unmittelbar an den Rohrschalen erfolgen. In der Praxis wurde festgestellt, dass die Rohrschalendichtungsmittel ihre Fähigkeit bei der Herstellung der Klemmen durch ein Spritzgussverfahren, nämlich die Rohroberschale gegenüber der Rohrunterschale an den zugehörigen Dichtungsflächen fluiddicht abzudichten, beibehalten. Grundsätzlich können die Klemmen unmittelbar an den Rohrschalen oder getrennt davon, also beanstandet von den Rohrschalen, durch ein Spritzgussverfahren hergestellt sein. Die erste Klemme ist radial außenseitig zu der ersten Axialdichtungsfläche und der ersten Axialgegendichtungsfläche angeordnet, um die obere Rohrschalen und die untere Rohroberschale in einem jeweils zugehörigen, angrenzenden Bereich zu greifen und zusammenzuklemmen. Die Rohroberschale und die Rohrunterschale können jeweils radial außenseitig Klemmflächen aufweisen, auf die die Klemmen greifen können, um Kräfte in entgegengesetzter Umfangsrichtung und/oder Tangentiahichtung auf die Rohroberschale bzw. die Rohrunterschale auszuüben. Da die Klemmen jeweils als Kunststoffspritzgussteil ausgestaltet sind, weisen sie jeweils eine elastische Verformbarkeit auf. Deshalb eignen sich die Klemmen, um entsprechende Kräfte in Umfangsrichtung und/oder Tangentialrichtung hervorzurufen. Indem die erste Klemme die Rohroberschale und die Rohrunterschale zusammenklemmt, bildet sich durch die erste Axialdichtungsfläche, die erste Axialgegendichtungsfläche und das dazwischen angeordnete, erste Rohrschalendichtungsmittel, welches durch das Zusammenklemmen dichtend an den angrenzenden Dichtungsflächen anliegt, eine erste fluiddichte Axialdichtung aus. Das erste Rohrschalendichtungsmittel ist vorzugsweise aus einem elastischen Polymer oder einem Elastomer, insbesondere einem thermoplastischen oder einem terpolymerem Elastomer. Für das Rohrschalendichtungsmittel kommen beispielsweise folgende Werkstoffe in Betracht: Silikon oder Kautschuk, insbesondere Ethylen-Propylen-Dien-Kautschuk oder Flur-Kautschuk. Die zweite Klemme ist vorzugsweise analog zu der ersten Klemme ausgestaltet. Allerdings ist die zweite Klemme radial außenseitig zu der zweiten Axialdichtungsfläche und der zweiten Axialgegendichtungsfläche angeordnet, so dass durch das Zusammenklemmen der Rohroberschale und der Rohrunterschale das zweite Rohrschalendichtungsmittel dichtend an der zweiten Axialdichtungsfläche und der zweiten Axialgegendichtungsfläche anliegt, um die zweite fluiddichte Axialdichtung zu bilden.

Gemäß einem weiteren Aspekt wird die eingangs genannte Aufgabe außerdem durch ein Verfahren zur Herstellung des hohlzylindrischen Rohrs mit den Merkmalen des Anspruchs 8 gelöst. Vorgesehen ist also ein Verfahren zur Herstellung eines hohlzylindrisches Rohrs zum Leiten eines Fluids durch einen von dem hohlzylindrischen Rohr in Axialrichtung ausgebildeten Kanal, aufweisend folgende Schritte: spritzgießendes Herstellen einer Rohrunterschale mit einer ersten und einer zweiten Axialdichtungsfläche, so dass sich die Rohrunterschale in Umfangsrichtung des Rohrs von der ersten Axialdichtungsfläche zu der zweiten Axialdichtungsfläche erstreckt, und spritzgießendes Herstellen einer Rohroberschale mit einer ersten und einer zweiten Axialgegendichtungsfläche, so dass sich die Rohroberschale in negativer Umfangsrichtung des Rohrs von der ersten Axialgegendichtungsfläche zu der zweiten Axialgegendichtungsfläche erstreckt, spritzgießendes Herstellen eines ersten und eines zweiten Rohrschalendichtungsmittels, und Bilden einer Mantelwandung des Rohrs, indem die Rohroberschale derart oberhalb der Rohrunterschale angeordnet wird, dass die erste Axialdichtungsfläche in Umfangsrichtung des Rohrs gegenüberliegend zu der ersten Axialgegendichtungsfläche und die zweite Axialdichtungsfläche in Umfangsrichtung des Rohrs gegenüberliegend zu der zweiten Axialgegendichtungsfläche ausgerichtet ist, wobei das erste Rohrschalendichtungsmittel zwischen der ersten Axialdichtungsfläche und der ersten Axialgegendichtungsfläche angeordnet ist, und wobei das zweite Rohrschalendichtungsmittel zwischen der zweiten Axialdichtungsfläche und der zweiten Axialgegendichtungsfläche angeordnet ist, weiter gekennzeichnet durch die Schritte: Vorspannen des ersten und des zweiten Rohrschalendichtungsmittels, indem die Rohroberschale gegen die Rohrunterschale mittels eines Klemmwerkzeugs gedrückt wird, spritzgießendes Herstellen einer ersten Klemme an der radialen Außenseite zu der ersten Axialdichtungsfläche und der ersten Axialgegendichtungsfläche, so dass die erste Klemme die Rohroberschale und die Rohrunterschale ergreift, spritzgießendes Herstellen einer zweiten Klemme an der radialen Außenseite zu der zweiten Axialdichtungsfläche und der zweiten

Axialgegendichtungsfläche, so dass die zweite Klemme die Rohroberschale und die Rohrunterschale ergreift, und Lösen des Klemmwerkzeugs von der Rohroberschale und der Rohrunterschale, so dass die erste Klemme die Rohroberschale und die Rohroberschale derart zusammenklemmt, dass sich durch die erste Axialdichtungsfläche, die erste Axialgegendichtungsfläche und das dazwischen angeordnete, erste Rohrschalendichtungsmittel eine erste fluiddichte Axialdichtung bildet, und die zweite Klemme die Rohroberschale und die Rohroberschale derart zusammenklemmt, dass sich durch die zweite Axialdichtungsfläche, die zweite Axialgegendichtungsfläche und das dazwischen angeordnete, zweite Rohrschalendichtungsmittel eine zweite fluiddichte Axialdichtung bildet. Dabei gelten Merkmale, Details und Vorteile, die im Zusammenhang mit dem erfindungsgemäßen Rohr beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Durch das erfindungsgemäße Verfahren wird der Erfindungsgedanke fortgeführt, die Rohrschalendichtungsmittel bei der Herstellung des hohlzylindrischen Rohrs nicht, insbesondere nicht thermisch, zu zerstören. Dazu ist zunächst vorgesehen, dass die Rohrunterschale, die Rohroberschale und die Rohrschalendichtungsmittel mittels eines Spritzgussverfahrens hergestellt werden. Daraufhin wird die Rohroberschale derart oberhalb der Rohrunterschale angeordnet, dass sich entsprechende Dichtungsfläche gegenüberliegend anordnen, wobei die Rohrschalendichtungsmittel jeweils zwischen zwei gegenüberliegenden Dichtungsflächen angeordnet werden. Jede der Rohrschalendichtungsmittel kann an einer der Dichtungsflächen vorab, insbesondere formschlüssig und/oder stoffschlüssig, befestigt sein. Mit einer entsprechenden Anordnung der Rohroberschale auf der Rohrunterschale bildet sich bereits die Mantelwandung des Rohrs aus. Um nun eine gewünschte fluiddichte Verbindung zwischen der Rohroberschale und der Rohrunterschale zu erreichen, wird zunächst die Rohroberschale gegen die Rohrunterschale gedrückt. Dies erfolgt mittels eines Klemmenwerkzeugs. Das Klemmenwerkzeug kann einer Spritzgussmaschine zugeordnet sein, die zum späteren Herstellen der Klemmen dient. Mit anderen Worten kann die Rohroberschale mittels der Spritzgussmaschine gegen die Rohrunterschale gedrückt werden, wobei die Spritzgussmaschine zum spritzgießenden Herstellen der Klemmen ausgebildet ist. Durch das Zusammendrücken werden die Rohrschalendichtungsmittel elastisch in Umfangsrichtung des Rohrs und/oder in Tangentialrichtung des Rohrs verformt. Sie werden dabei also vorgespannt. Durch diese Vorspannung liegen die Rohrschalendichtungsmittel jeweils dichtend an den angrenzenden Dichtungsflächen der Rohroberschale bzw. der Rohrunterschale an. Somit ist die Mantelwandung des Rohrs fluiddicht. Die Vorspannung der Rohrschalendichtungsmittel wird jedoch durch das Klemmenwerkzeug bzw. durch die Spritzgussmaschine verursacht. Um eine zumindest annähernd gleiche Vorspannung der Rohrschalendichtungsmittel auch nach einem Lösen bzw. Entfernen des Klemmenwerkzeugs zu erreichen, sind die erste und die zweite Klemme vorgesehen. Sie werden jeweils mittels eines Spritzgussverfahrens, vorzugsweise aus Kunststoff, hergestellt. Die erste Klemme wird an der radialen Außenseite zu der ersten Axialdichtungsfläche und der zweiten Axialdichtungsfläche spritzgießend hergestellt, so dass die erste Klemme die Rohroberschale und die Rohrunterschale greift. Für die zweite Klemme gilt entsprechendes. Vorgesehen ist also ein spritzgießendes Herstellen der zweiten Klemme an der radialen Außenseite zu der zweiten Axialdichtungsfläche und der zweiten Axialgegendichtungsfläche, so dass die zweite Klemme die Rohroberschale und die Rohrunterschale greift. Dabei können die beiden Klemmen mit ihren jeweiligen Enden auf Klemmflächen der Rohroberschale bzw. der Rohrunterschale greifen, um entgegengesetzte Kräfte aufzunehmen, die beim Lösen des Klemmenwerkzeugs durch die vorgespannten Rohrschalendichtungsmittel entstehen. Dazu wird schließlich das Klemmenwerkzeug von der Rohroberschale und der Rohrunterschale gelöst. Die Klemmen halten die Rohroberschale und die Rohrunterschale dabei zumindest im Wesentlichen in der Stellung, in die sie zuvor durch das Klemmenwerkzeug gedrückt worden sind. Deshalb klemmt die erste Klemme die Rohroberschale und die Rohrunterschale derart zusammen, dass sich durch die erste Axialdichtungsfläche, die erste Axialgegendichtungsfläche und das dazwischen angeordnete, erste Rohrschalendichtungsmittel eine erste fluiddichte Axialdichtung ausbildet. Außerdem klemmt die zweite Klemme die Rohroberschale und die Rohrunterschale derart zusammen, dass sich durch die zweite Axialdichtungsfläche, die zweite Axialgegendichtungsfläche und das dazwischen angeordnete, zweite Rohrschalendichtungsmittel eine zweite fluiddichte Axialdichtung ausbildet.

Eine vorteilhafte Ausgestaltung der Erfindung zeichnet sich dadurch aus, dass die Rohrunterschale einen ersten, radial nach außen ragenden Unterschalensteg, der die erste Axialdichtungsfläche zumindest teilweise bildet, und einen zweiten, radial nach außen ragenden Unterschalensteg, der die zweite Axialdichtungsfläche zumindest teilweise bildet, aufweist, und die Rohroberschale einen ersten, radial nach außen ragenden Oberschalensteg, der die erste Axialgegendichtungsfläche zumindest teilweise bildet, und einen zweiten, radial nach außen ragenden Oberschalensteg, der die zweite Axialgegendichtungsfläche zumindest teilweise bildet, aufweist, und die Klemmen jeweils C-förmig ausgestaltet sind, wobei die erste Klemme den ersten Oberschalensteg und den ersten Unterschalensteg zusammenklemmend übergreift, und wobei die zweite Klemme den zweiten Oberschalensteg und den zweiten Unterschalensteg zusammenklemmend übergreift. Dieser vorteilhaften Ausgestaltung liegt der Gedanke zu Grunde, dass die Rohroberschale und die Rohrunterschale bevorzugt durch ein Spritzgussverfahren hergestellt werden. Es ist deshalb möglich, an den umfangseitigen Endabschnitten der Rohroberschale bzw. der Rohrunterschale die jeweiligen Stege, insbesondere mit dem jeweiligen Spritzgussverfahrensschritt, herzustellen. Die Stege haben sodann eine Doppelfunktion. Einerseits bilden sie jeweils zumindest teilweise eine der Dichtungsflächen der Rohrschalen. Andererseits dienen sie als Stützmittel, um von den Klemmen Kräfte in Umfangsrichtung des Rohrs und/oder in Tangentialrichtung des Rohrs auf die Rohroberschale und die Rohrunterschale aufzunehmen. Durch ihre Doppelfunktion können die aufgenommenen Kräfte zumindest zu einem Großteil auf die Rohrschalendichtungsmittel übertragen werden. Um entsprechende Kräfte hervorzurufen, sind die Klemmen jeweils bevorzugt C-förmig ausgestaltet. So eignet sich die erste Klemme, um den ersten Oberschalensteg und den ersten Unterschalensteg zusammenklemmend zu übergreifen. Denn der erste Oberschalensteg und der ersten Unterschalensteg ragen gemeinsam mit dem dazwischen angeordneten ersten Rohrschalendichtungsmittel radial über die Rohroberschale bzw. über die Rohrunterschale nach außen. Entsprechend eignet sich die zweite Klemme, um den zweiten Oberschalensteg und den zweiten Unterschalensteg zusammenklemmend zu übergreifen. Grundsätzlich können vorgefertigte Klemmen von außen über die einander zugewandten Schalenstege geklemmt werden. Alternativ ist es jedoch auch möglich, dass die C-förmigen Klemmen übergreifend über die zugehörigen Schalenstege spritzgießenden hergestellt werden. Nach ihrer Aushärtung liegen die C-förmigen Klemmen sodann unmittelbar an den zugehörigen Schalenstegen an. Mit dem Lösen des Klemmenwerkzeugs bzw. der Spritzgussmaschine entsteht sodann die zusammenklemmende Wirkung der übergreifenden, C-förmigen Klemmen. Sowohl bei der Verwendung von vorgefertigten Klemmen als auch bei den zuletzt erläuterten, spritzgießenden hergestellten Klemmen werden die Rohrschalendichtungsmittel nicht zerstört. Die erste und die zweite fluiddichte Axialdichtung sind deshalb besonders robust gegenüber hohen Drücken und/oder Temperaturen des Fluids, das von dem erfindungsgemäßen Rohr geleitet werden kann.

Eine weitere vorteilhafte Ausgestaltung der Erfindung zeichnet sich dadurch aus, dass der erste Unterschalensteg an der von der ersten Axialdichtungsfläche abgewandten Seite Vertiefungen aufweist, der erste Oberschalensteg an der von der ersten Axialgegendichtungsfläche abgewandten Seite Vertiefungen aufweist, und die erste Klemme formschlüssig in die Vertiefungen des ersten Unterschalenstegs und des ersten Oberschalenstegs einfasst. Wie zuvor erläutert, kann hierfür eine vorgefertigte erste Klemme verwendet werden. Bevorzugt wird die erste Klemme jedoch gemäß dem erfindungsgemäßen Herstellungsverfahren hergestellt, so dass sich die erste Klemme durch den entsprechenden Spritzguss-Verfahrensschritt bis in die Vertiefungen des ersten Oberschalenstegs und des ersten Unterschalenstegs erstreckt. Durch das Einfassen der ersten Klemme in die genannten Vertiefungen entsteht eine formschlüssige Verbindung zwischen der ersten Klemme und dem ersten Oberschalensteg bzw. dem ersten Unterschalensteg. Dies sichert die erste Klemme gegenüber einem unerwünschten Abrutschen in Radialrichtung von der Rohroberschale bzw. der Rohrunterschale. Darüber hinaus wird mit dem formschlüssigen Einfassen der ersten Klemme in die zuvor genannten Vertiefungen eine relative Position der Rohroberschale zu der Rohrunterschale in Axialrichtung gesichert bzw. gewährleistet.

Eine weitere vorteilhafte Ausgestaltung der Erfindung zeichnet sich dadurch aus, dass der zweite Unterschalensteg an der von der zweiten Axialdichtungsfläche abgewandten Seite Vertiefungen aufweist, der zweite Oberschalensteg an der von der zweiten Axialgegendichtungsfläche abgewandten Seite Vertiefungen aufweist, und die zweite Klemme formschlüssig in die Vertiefungen des zweiten Oberschalenstegs und des zweiten Unterschalenstegs einfasst. Zur Vermeidung von Wiederholungen wird auf den vorangehenden Absatz Bezug genommen, wobei die entsprechenden Merkmale, Vorteile und Zusammenhänge analog für die zweite Klemme bzw. für den zweiten Oberschalensteg und den zweiten Unterschalensteg gelten. Die zweite Klemme dient deshalb ebenfalls zur Sicherung der relativen Axialposition zwischen der Rohroberschale und der Rohrunterschale.

Eine weitere vorteilhafte Ausgestaltung der Erfindung zeichnet sich dadurch aus, dass das erste und/oder das zweite Rohrschalendichtungsmittel jeweils als Elastomerspritzgussteil ausgestaltet sind bzw. ist. Elastomer-Dichtungsmittel haben sich für die Abdichtung von Rohrschalen als vorteilhaft herausgestellt. Außerdem lässt sich ein entsprechendes Rohrschalendichtungsmittel mit einem Spritzgussmittel aus Elastomer besonders einfach und kostengünstig herstellen.

Eine weitere vorteilhafte Ausgestaltung der Erfindung zeichnet sich dadurch aus, dass das erste Rohrschalendichtungsmittel formschlüssig an dem ersten Oberschalensteg oder dem ersten Unterschalensteg befestigt ist, und dass das zweite Rohrschalendichtungsmittel formschlüssig an dem zweiten Oberschalensteg oder dem zweiten Unterschalensteg befestigt ist. Mit der formschlüssigen Verbindung des ersten Rohrschalendichtungsmittel bzw. des zweiten Rohrschalendichtungsmittel ist eine Positionierung der Rohrschalendichtungsmittel besonders exakt möglich. Dies gilt insbesondere dann, wenn das erste Rohrschalendichtungsmittel spritzgießenden hergestellt wird, und zwar unmittelbar an dem ersten Oberschalensteg oder an dem ersten Unterschalensteg. In diesem Fall kann das während der Herstellung fließfähige Material des ersten Rohrschalendichtungsmittels in Öffnungen oder andere Hinterschneidungsbereiche des ersten Oberschalenstegs bzw. ersten Unterschalenstegs fließt, um sodann mit dem Abkühlen des Rohrschalendichtungsmittels die gewünschte formschlüssige Verbindung zu bilden. Entsprechendes gilt für das zweite Rohrschalendichtungsmittel, wenn dieses spritzgießend hergestellt wird, und zwar unmittelbar an dem zweiten Oberschalensteg oder an dem zweiten Unterschalensteg, wobei das zweite Rohschalendichtungsmittel sich in entsprechende Öffnungen und/oder Hinterschneidungsbereiche erstreckt.

Eine weitere vorteilhafte Ausgestaltung der Erfindung zeichnet sich dadurch aus, dass die Rohroberschale und/oder die Rohrunterschale jeweils als Kunststoffspritzgussteil ausgestaltet sind bzw. ist. Die Herstellung der Rohroberschale bzw. der Rohrunterschale als Spritzgussteil aus Kunststoff, wie beispielsweise Polyphenylensulfid, hat sich in der Praxis als besonders einfach und kostengünstig herausgestellt.

Die Erfindung wird nachstehend ohne Beschränkung des allgemeinen Erfindungsgedankens anhand von einem Ausführungsbeispiel unter Bezugnahme auf die Zeichnungen beschrieben. In den Zeichnungen zeigen:
Fig. 1 eine schematische Querschnittsansicht des hohlzylindrischen Rohrs, und
Fig. 2 eine schematische, perspektivische Ansicht des hohlzylindrischen Rohrs.

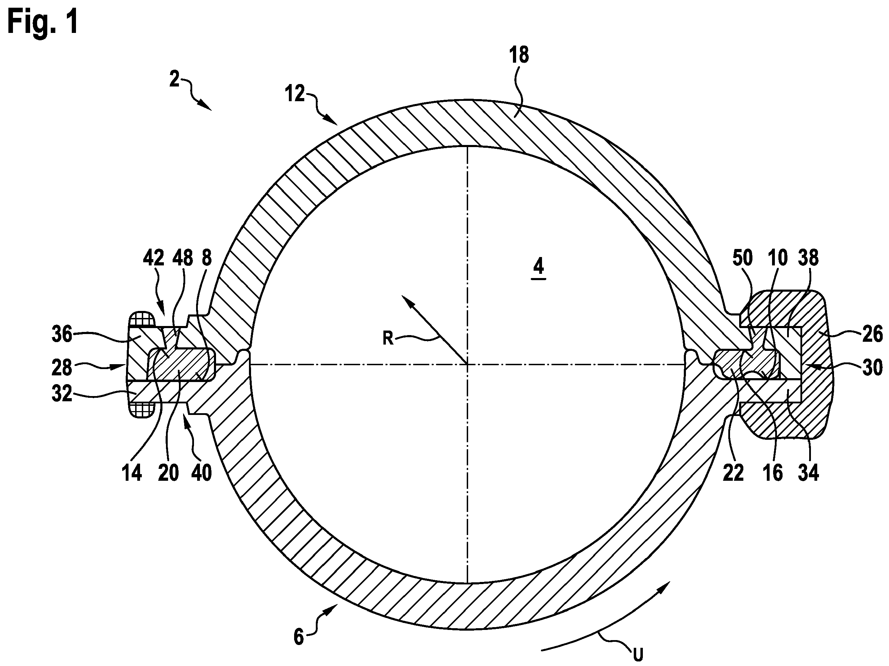

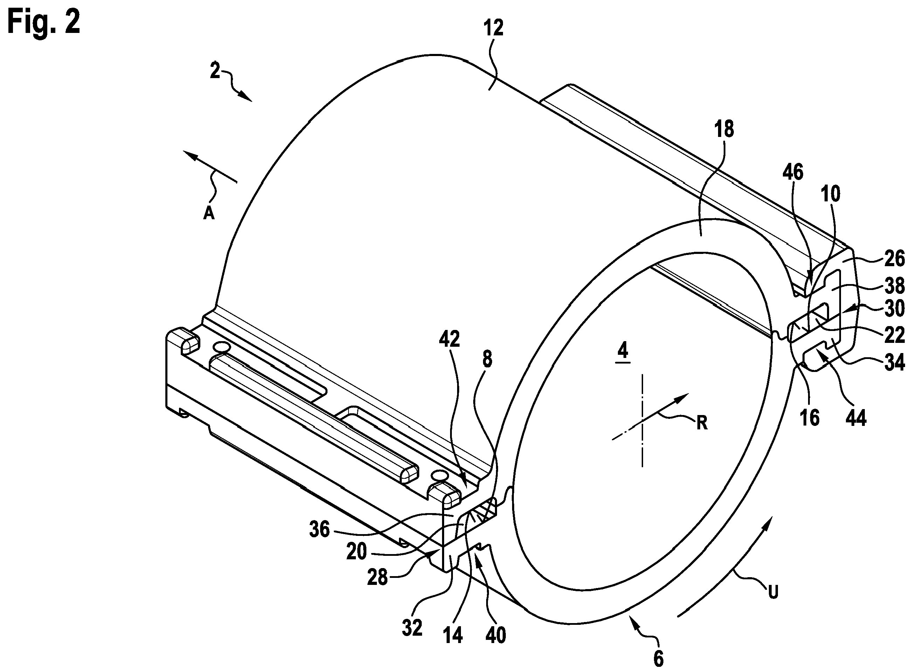

Aus der Figur 1 ist das hohlzylindrische Rohr 2 in einer schematischen Querschnittsansicht zu erkennen. Das hohlzylindrische Rohr 2 dient zum Leiten eines Fluids, insbesondere einer Flüssigkeit, wie beispielsweise ein Gemisch aus Wasser und Glykol. Das Fluid strömt dabei in eine Axialrichtung A, wie sie aus der Figur 2 zu erkennen ist, durch den von dem hohlzylindrischen Rohr 2 gebildeten Kanal 4. Bevorzugt ist der Kanal 4 kreiszylindrisch. Entsprechendes gilt auch für das Rohr 2, so dass dieses vorzugsweise mit kreisringförmigen Wandung 18 ausgestaltet ist. Andere Wandungsgeometrien für die Wandung 18 sind jedoch grundsätzlich möglich.

Das hohlzylindrische Rohr 2 weist eine Rohrunterschale 6 und eine Rohroberschale 12 auf. Dabei erstreckt sich die Rohrunterschale 6 in Umfangsrichtung U des Rohrs 2 von einer ersten Axialdichtungsfläche 8 der Rohrunterschale 6 zu einer zweiten Axialdichtungsfläche 10 der Rohrunterschale 6. Die Rohroberschale 12 erstreckt sich in Umfangsrichtung U des Rohrs 2 von einer zweiten Axialgegendichtungsfläche 16 zu einer ersten Axialgegendichtungsfläche 14. Aufgrund ihres Schalencharakters erstrecken sich sowohl die Rohrunterschale 6 als auch die Rohroberschale 12 in Axialrichtung A. Somit dienen sie auch zur Bildung der Mantelwandung 18 des Rohrs 2.

Um die Mantelwandung 18 des Rohrs 2 zu bilden, könnte die Rohroberschale 12 grundsätzlich unmittelbar auf die Rohrunterschale 6 aufgesetzt und verschweißt werden. In der Praxis hat sich dies jedoch als aufwändig und fehleranfällig erwiesen. Für das erfindungsgemäße Rohr 2 ist es deshalb vorgesehen, die Rohroberschale 12 ohne einen Schweiß-Verfahrensschritt mit der Rohrunterschale 6 fluiddicht zu verbinden.

Um eine entsprechende fluiddichte Verbindung zwischen der Rohroberschale 12 und der Rohrunterschale 6 zu schaffen, ist es vorgesehen, die Rohroberschale 12 kemmend an der Rohrunterschale 6 zu befestigen. Dabei hat sich jedoch als vorteilhaft erwiesen, wenn radial nach außen ragende Stege 32, 34, 36, 38 an den Schnittstellen zwischen der Rohroberschale 12 und der Rohrunterschale 6 vorgesehen sind. So weist die Rohrunterschale 6 deshalb an einem umfangseitigen Ende einen ersten, radial nach außen ragenden Unterschalensteg 32 auf. Der erste Unterschalensteg 32 kann dabei die erste Axialdichtungsfläche 8 zumindest teilweise bilden. An ihrem anderen umfangsseitigen Ende weist die Rohrunterschale 6 einen zweiten, radial nach außen ragenden Unterschalensteg 34 auf. Dieser kann die zweite Axialdichtungsfläche 10 der Rohrunterschale 6 zumindest teilweise bilden. Mit den beiden Stegen 32, 34 der Rohrunterschale 6 können Kräfte auf die Rohrunterschale 6 eingeleitet werden, die in Normalenrichtung der ersten und zweiten Axialdichtungsflächen 8, 10 wirken.

Die Rohroberschale 12 ist ganz ähnlich zu der Rohrunterschale 6 ausgestaltet. Sie weist an einem umfangsseitigen Ende einen ersten, radial nach außen ragenden Oberschalensteg 36 auf. Der Oberschalensteg 36 kann die erste Axialgegendichtungsfläche 14 der Rohroberschale 12 zumindest teilweise bilden. Außerdem weist die Rohroberschale 12 an dem anderen umfangreichen Ende einen zweiten, radial nach außen ragenden Oberschalensteg 38 auf. Dieser kann die zweite Axialgegendichtungsfläche 16 der Rohroberschale 12 zumindest teilweise bilden. Analog zu der Rohrunterschale 6 können mit den beiden Stegen 36, 38 der Rohroberschale 12 Kräfte auf die Rohroberschale eingeleitet werden, die in Normalenrichtung der ersten und der zweiten Axialgegendichtungsflächen 14, 16 wirken.

Sowohl die Rohrunterschale 6 als auch die Rohroberschale 12 können jeweils mittels eines Spritzgussverfahrensschritts hergestellt werden. Bevorzugt sind die Rohrunterschale 6 und die Rohroberschale 12 jeweils aus einem Kunststoff hergestellt, beispielsweise aus einem thermoplastischen Kunststoff, wie beispielsweise Polyphenylensulfid. Sofern das hohlzylindrische Rohr 2 zum Leiten bzw. Transportieren von einem Gemisch aus Wasser und Glykol eingesetzt wird, wobei das genannte Gemisch beispielsweise eine Temperatur zwischen 130 °C und 170 °C aufweist, haben sich thermoplastische Kunststoffe, insbesondere das Polyphenylensulfid, als besonders temperaturbeständig erwiesen. Die mittlere Wandstärke in Radialrichtung R der Rohrunterschale 6 und der Rohroberschale 12 können dazu jeweils zwischen 2 mm und 4 mm, bevorzugt etwa 3 mm, aufweisen.

Bevor nun die Rohroberschale 12 zum Bildung der Mantelwandung 18 des Rohrs 2 auf die Rohrunterschale 6 aufgesetzt wird, sind zwischen den Dichtungsflächen 8, 10, 14, 16 Dichtungsmittel 20, 22 anzuordnen, um eine bessere Abdichtung zwischen der Rohroberschale 12 und der Rohrunterschale 6 zu gewährleisten. Dazu ist es vorgesehen, dass das erste Rohrschalendichtungsmittel 20 zwischen der ersten Axialdichtungsfläche 8 und der in Umfangsrichtung U gegenüberliegenden, ersten Axialgegendichtungsfläche 14 angeordnet wird. Das zweite Rohrschalendichtungsmittel 22 ist zwischen der zweiten Axialdichtungsfläche 10 und der in Umfangsrichtung U gegenüberliegenden, zweiten Axialgegendichtungsfläche 16 anzuordnen.

Für eine besonders gute Dichtungswirkung hat es sich in der Praxis als vorteilhaft erwiesen, wenn das erste Rohrschalendichtungsmittel 20 und das zweite Rohrschalendichtungsmittel 22 jeweils aus einem Elastomer hergestellt sind. Bevorzugt sind das erste Rohrschalendichtungsmittel 20 und das zweite Rohrschalendichtungsmittel 22 ebenfalls durch einen Spritzgussverfahrensschritt hergestellt. Grundsätzlich kann der jeweils zugehörige Spritzgussverfahrensschritt unabhängig von der Herstellung der Rohrunterschale 6 bzw. der Rohroberschale 12 erfolgen. Für eine möglichst genaue Positionierung der beiden Rohrschalendichtungsmittel 20, 22 ist es jedoch von Vorteil, wenn sie unmittelbar an der Rohrunterschale 6 oder an der Rohroberschale 12 spritzgießenden hergestellt werden. So kann das erste Rohrschalendichtungsmittel 20 unmittelbar an der ersten Axialdichtungsfläche 8 bzw. dem ersten Unterschalensteg 32 der Rohrunterschale 6 oder an der ersten Axialgegendichtungsfläche 14 bzw. dem ersten Oberschalensteg 36 der Rohroberschale 12 spritzgießenden hergestellt werden. Um eine möglichst belastbare mechanische Verbindung zwischen dem ersten Rohrschalendichtungsmittel 20 und dem ersten Unterschalensteg 32 bzw. dem ersten Unterschalensteg 36 herzustellen, können insbesondere konische Bohrungen 48 an oder durch den ersten Unterschalensteg 32 bzw. dem ersten Oberschalensteg 36 vorgesehen sein. Wie aus den Figuren 1 und 2 zu entnehmen ist, zeigen diese entsprechende Bohrungen 48 durch den ersten Oberschalensteg 36. In diese Bohrungen 48 erstreckt sich sodann das erste Rohrschalendichtungsmittel 20, so dass es zu einer formschlüssigen Verbindung zwischen dem Rohrschalendichtungsmittel 20 und dem ersten Oberschalensteg 36 kommt. Entsprechendes gilt für das zweite Rohrschalendichtungsmittel 22. Dies kann unmittelbar an der zweiten Axialdichtungsfläche 10 bzw. dem zweiten Unterschalensteg 34 oder an der zweiten Axialgegendichtungsfläche 16 bzw. den zweiten Oberschalensteg 38 spritzgießendes hergestellt werden. Analog können insbesondere konische Bohrungen 50 an oder durch den zweiten Unterschalensteg 34 bzw. den zweiten Oberschalensteg 38 vorgesehen sein. Für die Ausgestaltung des hohlzylindrischen Rohrs 2, wie es aus den Figuren 1 und 2 zu entnehmen ist, sind die konischen Bohrungen 50 für den zweiten Oberschalensteg 38 vorgesehen. In diese Bohrungen 50 erstreckt sich das zweite Rohrschalendichtungsmittel 22, so dass es zu der gewünschten formschlüssigen Verbindung kommt.

Mit den an dem Oberschalensteg 12 befestigten Rohrschalendichtungsmittel 20, 22 wird die Rohroberschale 12 nun auf die Rohrunterschale 6 gesetzt. Dabei sind die Rohroberschale 12 und die Rohrunterschale 6 derart zueinander anzuordnen, dass die erste Axialdichtungsfläche 8 gegenüberliegend zu der ersten Axialgegendichtungsfläche 14 und die zweite Axialdichtungsfläche 10 gegenüberliegend zu der zweiten Axialgegendichtungsfläche 16 angeordnet ist. Zwischen der ersten Axialdichtungsfläche 8 und der ersten Axialgegendichtungsfläche 14 ist dabei zusätzlich das erste Rohrschalendichtungsmittel 20 angeordnet. Außerdem ist zwischen der zweiten Axialdichtungsfläche 10 und der zweiten Axialgegendichtungsfläche 16 das zweite Rohrschalendichtungsmittel 22 angeordnet. Um nun die dichtende Wirkung zwischen der Rohroberschale 12 und der Rohrunterschale 6 zu gewährleisten, wird die Rohroberschale 12 derart gegen die Rohrunterschale 6 gedrückt, dass das erste Rohrschalendichtungsmittel 20 und das zweite Rohrschalendichtungsmittel 22 in Umfangsrichtung U gestaut werden. Das erste Rohrschalendichtungsmittel 20 und das zweite Rohrschalendichtungsmittel 22 werden also mechanisch vorgespannt. Die Vorspannung ist dabei derart gewählt, dass es ausschließlich zu einer elastischen Verformung des ersten Rohrschalendichtungsmittel 20 und des zweiten Rohrschalendichtungsmittel 22 kommt. Bei der Herstellung können für das erste Rohrschalendichtungsmittel 20 und das zweite Rohrschalendichtungsmittel 22 jeweils an zumindest einer zugehörigen, umfangsseitigen Fläche Wellenprofile vorgesehen sein.

Zum Aufbringen der Vorspannung für das erste Rohrschalendichtungsmittel 20 und das zweite Rohrschalendichtungsmittel 22 kann ein Klemmwerkzeug eingesetzt werden. In der Praxis hat es sich als vorteilhaft erwiesen, wenn das Klemmwerkzeug durch das Spritzgusswerkzeug gebildet ist, das auch zum spritzgießendes Herstellen der Rohrschalendichtungsmittel 20, 22, der Rohrunterschale 6 und/oder der Rohroberschale 12 verwendet wird. Dies verringert die Fehlerwahrscheinlichkeit bei der Herstellung des hohlzylindrischen Rohrs 2 und beschleunigte gleichzeitig dessen Herstellung.

Um die genannte Vorspannung auch ohne das Klemmwerkzeug zu erhalten, sind für das hohlzylindrische Rohr 2 eine erste Klemme und eine zweite Klemme 26 vorgesehen. Aus den Figuren 1 und 2 ist zur besseren Nachvollziehbarkeit zunächst nur zu einer Seite die zweite Klemme 26 dargestellt. Die erste Klemme wird jedoch für die gegenüberliegende Seite ebenfalls vorgesehen sein.

Wie in den Figuren 1 und 2 dargestellt, ist die zweite Klemme 26 ist radial außenseitig zu der zweiten Axialdichtungsfläche 10 und der zweiten Axialgegendichtungsfläche 16 angeordnet. Aus der Figur 2 ist außerdem zu entnehmen, dass sich die zweite Klemme 26 in Axialrichtung A parallel zu der zweiten Axialdichtungsfläche 10 und der zweiten Axialgegendichtungsfläche 16 erstreckt. Die zweite Klemme 26 ist im Querschnitt C-förmig ausgestaltet. Um nun die Rohroberschale 12 und die Rohrunterschale 6 zusammenzuklemmen, übergreift die zweite Klemme 26 den entsprechend zugehörigen zweiten Oberschalensteg 38 und den entsprechend zugehörigen zweiten Unterschalensteg 34 und klemmt diese zusammen. Dabei wird der umgriffene Bereich außerdem vor äußeren Einflüssen geschützt. Die erste Klemme ist analog zu der zweiten Klemme 26 ausgestaltet. Die erste Klemme ist im Querschnitt also ebenfalls C-förmig. Die erste Klemme klemmt die Rohroberschale 12 und die Rohrunterschale 6 zusammen, indem sie den entsprechend zugehörigen ersten Unterschalensteg 32 und den entsprechend zugehörigen ersten Oberschalensteg 36 zusammenklemmt. Hierdurch wird ebenfalls der der umgriffene Bereich vor äußeren Einflüssen geschützt. Durch die Klemmung mittels der ersten Klemme und der zweiten Klemme 26 bleibt die Vorspannung der ersten und der zweiten Rohrschalendichtungsmittel 20, 22 erhalten. Dies gilt auch bei einem Lösen des Klemmwerkzeugs von der Rohroberschale 12 und der Rohrunterschale 6. Durch die erste Axialdichtungsfläche 8, die erste Axialgegendichtungsfläche 14 und das dazwischen eingeklemmte, erste Rohrschalendichtungsmittel 20 bildet sich somit eine erste fluiddichte Axialdichtung 28 aus. Außerdem bildet sich durch die zweite Axialdichtungsfläche 10 die zweite Axialgegendichtungsfläche und das dazwischen eingeklemmte, zweite Rohrschalendichtungsmittel 22 die zweite fluiddichte Axialdichtung 30 aus. Indem die erste Klemme und die zweite Klemme 26 die Vorspannung der Rohrschalendichtungsmittel 20, 22 auch beim Entfernen des Klemmwerkzeugs aufrechterhalten, wird die Rohroberschale 12 also fluiddicht unter Ausbildung der ersten Axialdichtungsfläche 28 und der zweiten Axialdichtungsfläche 30 an der Rohrunterschale 6 befestigt.
Grundsätzlich kann es vorgesehen sein, vorgefertigte Klemmen 26 zu verwenden. Diese können dann in die gewünschte Position von außen in Radialrichtung R auf die entsprechenden Stegpaare 32, 36 bzw. 34, 38 geschoben werden. Für eine zeiteffektive Herstellung des hohlzylindrischen Rohrs 2 hat es sich als vorteilhaft erwiesen, die erste Klemme und die zweite Klemme 26 unmittelbar an der Rohroberschale 12 und der Rohrunterschale 6 spritzgießenden herzustellen, so dass diese nach ihrem Abkühlen und Lösen des Klemmwerkzeugs die Vorspannung des ersten und des zweiten Rohrschalendichtungsmittels 20, 22 aufrechterhalten. Dazu kann die erste Klemme unmittelbar an der radialen Außenseite zu der ersten Axialdichtungsfläche 8 bzw. dem ersten Unterschalensteg 32 und der ersten Axialgegendichtungsfläche 14 bzw. dem ersten Oberschalensteg 36 mittels eines Spritzgussverfahrensschritts hergestellt werden. Entsprechendes gilt für die zweite Klemme 26. Diese kann unmittelbar an der radialen Außenseite zu der zweiten Axialdichtungsfläche 10 bzw. den zweiten Unterschalensteg 34 und der zweiten Axialgegendichtungsfläche 16 bzw. den zweiten Oberschalensteg 38 mittels eines Spritzgussverfahrensschritts hergestellt werden. Während des spritzgießenden Herstellens der ersten Klemme und der zweiten Klemme 26 werden das erste und das zweite Rohrschalendichtungsmittel 20, 22 durch das Klemmwerkzeug unter Vorspannung gehalten. Die erste Klemme und die zweite Klemme 26 können deshalb von der genannten Vorspannung unbehindert abkühlen. Sobald die erste Klemme und die zweite Klemme 26 eine gewünschte Temperatur und/oder Abkühldauer erreicht haben, kann das Klemmwerkzeug von der Rohroberschale 12 und der Rohrunterschale 6 gelöst werden. Von da an dienen die erste Klemme und die zweite Klemme 26 zur Aufrechterhaltung der genannten Vorspannung.

Bevorzugt sind die erste Klemme und die zweite Klemme 26 jeweils aus einem Kunststoff hergestellt, beispielsweise aus einem thermoplastischen Kunststoff, wie beispielsweise Polyphenylensulfid. Indem sowohl die Rohroberschale 12 und die Rohrunterschale 6 als auch die erste Klemme und die zweite Klemme 26 aus einem thermoplastischen Kunststoff hergestellt werden, kann für ihre Herstellung die gleiche Spritzgussmaschine verwendet werden. Dies erleichtert die Herstellung und verringert die zugehörigen Kosten.

Weiteren kann es vorgesehen sein, dass die erste Klemme und die zweite Klemme 26 an ihren jeweiligen, gleichseitigen axialen Enden jeweils durch ein bogenförmiges Verbindungsmittel verbunden sind. Es können also zwei Verbindungsmittel vorgesehen sein, wobei jeweils eins an den gleichseitigen axialen Endabschnitten der ersten und zweiten Klemme 26 angeordnet ist. Die Endabschnitte bilden dabei nicht notwendigerweise Enden der Klemmen 26. Vielmehr können die beiden Klemmen 26 mit den Verbindungsmitteln, die ebenfalls nach Art der Klemmen ausgebildet sein können, endlos sein. Mit den Verbindungsmitteln können die erste Klemme und die zweite Klemme 26 eine ringförmige Klemme bilden. Dies verbessert die Abrutschsicherung der ersten Klemme und der zweiten Klemme 26 von der Rohroberschale 12 bzw. der Rohrunterschale 6 und erleichtert zugleich die Herstellung.

Um ein selbsttätiges und unerwünschtes Lösen der ersten Klemme und der zweiten Klemme 26 von der Rohroberschale 12 bzw. der Rohrunterschale 6 zu verhindern, ist es weiter vorgesehen, dass die erste Klemme und die zweite Klemme 26 die Rohroberschale 12 und die Rohrunterschale 6 formschlüssig greifen. So ist es für die zweite Klemme 26 vorgesehen, dass der zweite Unterschalensteg 34 an der von der zweiten Axialdichtungsfläche 10 abgewandten Seite Vertiefungen 44 aufweist, und dass der zweite Oberschalensteg 38 an der von der zweiten Axialgegendichtungsfläche 16 abgewandten Seite Vertiefungen 46 aufweist. Durch ihre C-förmige Ausgestaltung fasst die zweite Klemme 26 formschlüssig in die Vertiefungen 44, 46. Besonders bevorzugt sind die Vertiefungen 44, 46 in Axialrichtung A segmentiert. Mit dem Einfassen der zweiten Klemme 26 in die genannten Vertiefungen 44, 46 wird deshalb sowohl die Klemme an einem selbsttätigen Abrutschen gehindert als auch eine exakte relative Position der Rohroberschale 12 zu der Rohrunterschale 6 gesichert.
Eine analoge Ausgestaltung ist für die erste Klemme (in den Figuren nicht dargestellt) vorgesehen. Dabei weisen der erste Unterschalensteg 32 an der von der ersten Axialdichtungsfläche 8 abgewandten Seite Vertiefungen 40 und der erste Oberschalensteg 36 an der von der ersten Axialgegendichtungsfläche 14 abgewandten Seite Vertiefungen 42 auf. Da die erste Klemme analog zu der zweiten Klemme 26 im Querschnitt C-förmig ausgestaltet ist, fasst die erste Klemme formschlüssig in die zuletzt genannten Vertiefungen 40, 42. Damit wird die erste Klemme effektiv an einem ungewollten Abrutschen von der Rohroberschale 12 bzw. der Rohrunterschale 6 gehindert. Außerdem ist es, wie in der Figur 2 dargestellt, vorgesehen, dass die Vertiefungen 40, 42 segmentiert ausgestaltet sind. Indem die erste Klemme in die Vertiefungen 40, 42 einfasst, entsteht zugleich eine Axialsichtung für die Rohroberschale 12 an der Rohrunterschale 6.

### Bezugszeichenliste

### (Teil der Beschreibung)

- A: Axialrichtung
- R: Radialrichtung
- U: Umfangsrichtung
- 2: Rohr
- 4: Kanal
- 6: Rohrunterschale
- 8: erste Axialdichtungsfläche
- 10: zweite Axialdichtungsfläche
- 12: Rohroberschale
- 14: erste Axialgegendichtungsfläche
- 16: zweite Axialgegendichtungsfläche
- 18: Mantelwandung
- 20: erstes Rohrschalendichtungsmittel
- 22: zweites Rohrschalendichtungsmittel
- 26: zweite Klemme
- 28: erste Axialdichtung
- 30: zweite Axialdichtung
- 32: erster Unterschalensteg
- 34: zweiter Unterschalensteg
- 36: erster Oberschalensteg
- 38: zweiter Oberschalensteg
- 40: Vertiefungen
- 42: Vertiefungen
- 44: Vertiefungen
- 46: Vertiefungen
- 48: Bohrung
- 50: Bohrung

## Patentansprüche

1. **Hohlzylindrisches Rohr (2)** zum Leiten eines Fluids durch einen von dem hohlzylindrischen Rohr (2) in Axialrichtung A ausgebildeten Kanal (4), aufweisend:
- eine Rohrunterschale (6), die sich in Umfangsrichtung U des Rohrs (2) von einer ersten Axialdichtungsfläche (8) zu einer zweiten Axialdichtungsfläche (10) erstreckt,
- eine Rohroberschale (12), die sich in Umfangsrichtung U des Rohrs (2) von einer zweiten Axialgegendichtungsfläche (16) zu einer ersten Axialgegendichtungsfläche (14) erstreckt,
- wobei zur Bildung einer Mantelwandung (18) des Rohrs (2) die Rohroberschale (12) derart oberhalb der Rohrunterschale (6) angeordnet ist, dass die erste Axialdichtungsfläche (8) in Umfangsrichtung U des Rohrs (2) gegenüberliegend zu der ersten Axialgegendichtungsfläche (14) und die zweite Axialdichtungsfläche (10) in Umfangsrichtung U des Rohrs (2) gegenüberliegend zu der zweiten Axialgegendichtungsfläche (16) ausgerichtet ist,
und wobei das Rohr (2) weiter aufweist:
- ein erstes Rohrschalendichtungsmittel (20), das zwischen der ersten Axialdichtungsfläche (8) und der ersten Axialgegendichtungsfläche (14) angeordnet ist, und
- ein zweites Rohrschalendichtungsmittel (22), das zwischen der zweiten Axialdichtungsfläche (10) und der zweiten Axialgegendichtungsfläche (16) angeordnet ist,
**dadurch gekennzeichnet, dass**
- eine erste, radial außenseitig zu der ersten Axialdichtungsfläche (8) und der ersten Axialgegendichtungsfläche (14) angeordnete und parallel dazu in Axialrichtung A erstreckende Klemme vorgesehen ist, die die Rohroberschale (12) und die Rohrunterschale (6) derart zusammenklemmt, dass durch die erste Axialdichtungsfläche (8), die erste Axialgegendichtungsfläche (14) und das dazwischen angeordnete, erste Rohrschalendichtungsmittel (20) eine erste fluiddichte Axialdichtung (28) gebildet ist, und
- eine zweite, radial außenseitig zu der zweiten Axialdichtungsfläche (10) und der zweiten Axialgegendichtungsfläche (16) angeordnete und parallel dazu in Axialrichtung A erstreckende Klemme (26) vorgesehen ist, die die Rohroberschale (12) und die Rohrunterschale (6) derart zusammenklemmt, dass durch die zweite Axialdichtungsfläche (10), die zweite Axialgegendichtungsfläche (16) und das dazwischen angeordnete, zweite Rohrschalendichtungsmittel (22) eine zweite fluiddichte Axialdichtung (30) gebildet ist, und
- die erste Klemme und die zweite Klemme (26) jeweils als Kunststoffspritzgussteil ausgestaltet sind.

2. Hohlzylindrisches Rohr (2) nach dem vorhergehenden Anspruch, **dadurch gekennzeichnet, dass**
- die Rohrunterschale (6) einen ersten, radial nach außen ragenden Unterschalensteg (32), der die erste Axialdichtungsfläche (8) zumindest teilweise bildet, und einen zweiten, radial nach außen ragenden Unterschalensteg (34), der die zweite Axialdichtungsfläche (10) zumindest teilweise bildet, aufweist, und
- die Rohroberschale (12) einen ersten, radial nach außen ragenden Oberschalensteg (36), der die erste Axialgegendichtungsfläche (14) zumindest teilweise bildet, und einen zweiten, radial nach außen ragenden Oberschalensteg (38), der die zweite Axialgegendichtungsfläche (16) zumindest teilweise bildet, aufweist, und
- die Klemmen (26) jeweils C-förmig ausgestaltet sind, wobei die erste Klemme den ersten Oberschalensteg (36) und den ersten Unterschalensteg (32) zusammenklemmend übergreift, und wobei die zweite Klemme (26) den zweiten Oberschalensteg (38) und den zweiten Unterschalensteg (34) zusammenklemmend übergreift.

3. Hohlzylindrisches Rohr (2) nach dem vorhergehenden Anspruch, **dadurch gekennzeichnet, dass** der erste Unterschalensteg (32) an der von der ersten Axialdichtungsfläche (8) abgewandten Seite Vertiefungen (40) aufweist, der erste Oberschalensteg (36) an der von der ersten Axialgegendichtungsfläche (14) abgewandten Seite Vertiefungen (42) aufweist, und die erste Klemme formschlüssig in die Vertiefungen (40, 42) des ersten Unterschalenstegs (32) und des ersten Oberschalenstegs (36) einfasst.

4. Hohlzylindrisches Rohr (2) nach einem der vorhergehenden Ansprüche 2 bis 3, **dadurch gekennzeichnet, dass** der zweite Unterschalensteg (34) an der von der zweiten Axialdichtungsfläche (10) abgewandten Seite Vertiefungen (44) aufweist, der zweite Oberschalensteg (38) an der von der zweiten Axialgegendichtungsfläche (16) abgewandten Seite Vertiefungen (46) aufweist, und die zweite Klemme (26) formschlüssig in die Vertiefungen (44, 46) des zweiten Oberschalenstegs (38) und des zweiten Unterschalenstegs (34) einfasst.

5. Hohlzylindrisches Rohr (2) nach einem der vorhergehenden Ansprüche, **dadurch gekennzeichnet, dass** das erste und/oder das zweite Rohrschalendichtungsmittel (20, 22) jeweils als Elastomerspritzgussteil ausgestaltet sind bzw. ist.

6. Hohlzylindrisches Rohr (2) nach einem der vorhergehenden Ansprüche 2 bis 5, **dadurch gekennzeichnet, dass** das erste Rohrschalendichtungsmittel (20) formschlüssig an dem ersten Oberschalensteg (36) oder dem ersten Unterschalensteg (32) befestigt ist, und dass das zweite Rohrschalendichtungsmittel (22) formschlüssig an dem zweiten Oberschalensteg (38) oder dem zweiten Unterschalensteg (34) befestigt ist.

7. Hohlzylindrisches Rohr (2) nach einem der vorhergehenden Ansprüche, **dadurch gekennzeichnet, dass** die Rohroberschale (12) und/oder die Rohrunterschale (6) jeweils als Kunststoffspritzgussteil ausgestaltet sind bzw. ist.

8. **Verfahren zur Herstellung** eines hohlzylindrisches Rohrs (2) zum Leiten eines Fluids durch einen von dem hohlzylindrischen Rohr (2) in Axialrichtung A ausgebildeten Kanal (4), aufweisend folgende Schritte:
- spritzgießendes Herstellen einer Rohrunterschale (6) mit einer ersten und einer zweiten Axialdichtungsfläche (8, 10), so dass sich die Rohrunterschale (6) in Umfangsrichtung U des Rohrs (2) von der ersten Axialdichtungsfläche (8) zu der zweiten Axialdichtungsfläche (10) erstreckt, und
- spritzgießenden Herstellen einer Rohroberschale (12) mit einer ersten und einer zweiten Axialgegendichtungsfläche (14, 16), so dass sich die Rohroberschale (12) in Umfangsrichtung U des Rohrs (2) von der zweiten Axialgegendichtungsfläche (16) zu der ersten Axialgegendichtungsfläche (14) erstreckt,
- spritzgießendes Herstellen eines ersten und eines zweiten Rohrschalendichtungsmittels (20, 22), und
- Bilden einer Mantelwandung (18) des Rohrs (2), indem die Rohroberschale (12) derart oberhalb der Rohrunterschale (6) angeordnet wird, dass die erste Axialdichtungsfläche (8) in Umfangsrichtung U des Rohrs (2) gegenüberliegend zu der ersten Axialgegendichtungsfläche (14) und die zweite Axialdichtungsfläche (10) in Umfangsrichtung U des Rohrs (2) gegenüberliegend zu der zweiten Axialgegendichtungsfläche (16) ausgerichtet ist, wobei das erste Rohrschalendichtungsmittel (20) zwischen der ersten Axialdichtungsfläche (8) und der ersten Axialgegendichtungsfläche (14) angeordnet ist, und wobei das zweite Rohrschalendichtungsmittel (22) zwischen der zweiten Axialdichtungsfläche (10) und der zweiten Axialgegendichtungsfläche (16) angeordnet ist,
**gekennzeichnet durch** die Schritte:
- Vorspannen des ersten und des zweiten Rohrschalendichtungsmittels (20, 22), indem die Rohroberschale (12) gegen die Rohrunterschale (6) mittels eines Klemmwerkzeugs gedrückt wird,
- spritzgießendes Herstellen einer ersten Klemme an der radialen Außenseite zu der ersten Axialdichtungsfläche (8) und der ersten Axialgegendichtungsfläche (14), so dass die erste Klemme die Rohroberschale (12) und die Rohrunterschale (6) ergreift,
- spritzgießendes Herstellen einer zweiten Klemme (26) an der radialen Außenseite zu der zweiten Axialdichtungsfläche (10) und der zweiten Axialgegendichtungsfläche (16), so dass die zweite Klemme (26) die Rohroberschale (12) und die Rohrunterschale (6) ergreift, und
- Lösen des Klemmwerkzeugs von der Rohroberschale (12) und der Rohrunterschale (6), so dass die erste Klemme die Rohroberschale (12) und die Rohroberschale (12) derart zusammenklemmt, dass sich **durch** die erste Axialdichtungsfläche (8), die erste Axialgegendichtungsfläche (14) und das dazwischen angeordnete, erste Rohrschalendichtungsmittel (20) eine erste fluiddichte Axialdichtung (28) bildet, und die zweite Klemme (26) die Rohroberschale (12) und die Rohroberschale (12) derart zusammenklemmt, dass sich **durch** die zweite Axialdichtungsfläche (10), die zweite Axialgegendichtungsfläche (16) und das dazwischen angeordnete, zweite Rohrschalendichtungsmittel (22) eine zweite fluiddichte Axialdichtung (30) bildet.
